# EUROPÄISCHE PATENTANMELDUNG

(11) **EP 2 905 878 A2**
(43) Veröffentlichungstag der Anmeldung: **12.08.2015**
(21) Anmeldenummer: 14195189.7
(22) Anmeldetag: 27.11.2014
(51) Int. Cl.: H02K 5/128

(54) **Spaltrohrmotor für eine Ölpumpe**

(30) Priorität: 07.02.2014 DE 102014202284
(71) Anmelder: Bühler Motor GmbH, 90459 Nürnberg (DE)
(72) Erfinder: DIETRICH, Nikolaus, 90461 Nürnberg (DE); BRUNNER, Achim, 91088 Bubenreuth (DE)

(57) **Zusammenfassung**

Die Erfindung betrifft einen Spaltrohrmotor (1) für eine Ölpumpe, mit einem Stator (2), mit ausgeprägten Statorpolen (3), welche mit einer Isolierung (4) und einer Wicklung (5) versehen sind und Polschuhe (9) aufweisen, deren tangentiale Enden (17) gegenüber einer von einer Drehachse (18) des Spaltrohrmotors (1) ausgehenden radialen Linie (19) geneigt sind, so dass sich ein Zwischenraum (7) zwischen zwei benachbarten Polschuhen (9) nach radial außen verengt, mit einem permanentmagnetischen Innenrotor (10) und einem einen Rotorraum (11) von einem Statorraum (12) trennenden Spaltrohr (6), das außen an die Statorpole (3) und an die Polschuhe (9) innerhalb eines Luftspalts (13) anschmiegbar ist und einstückig mit keilförmigen Vorsprüngen (8) geformt ist, die in die Zwischenräume (7) eingreifen. Aufgabe der Erfindung ist es bei einem Spaltrohrmotor der eingangs genannten Gattung dafür Sorge zu tragen, dass das Spaltrohr eine hohe Druckfestigkeit aufweist und dabei so dimensioniert ist, dass der Wirkungsgrad möglichst wenig beeinträchtigt wird, das Gewicht gering ist und Toleranzen ausgleichbar sind und eine hohe Wirtschaftlichkeit erreicht wird. Diese Aufgabe wird erfindungsgemäß durch das Kennzeichen des Anspruchs 1 gelöst.

## Beschreibung

Die Erfindung betrifft einen Spaltrohrmotor (1) für eine Ölpumpe, mit einem Stator (2), mit ausgeprägten Statorpolen (3), welche mit einer Isolierung (4) und einer Wicklung (5) versehen sind und Polschuhe (9) aufweisen, deren tangentiale Enden (17) gegenüber einer von einer Drehachse (18) des Spaltrohrmotors (1) ausgehenden radialen Linie (19) geneigt sind, so dass sich ein Zwischenraum (7) zwischen zwei benachbarten Polschuhen (9) nach radial außen verengt, mit einem permanentmagnetischen Innenrotor (10) und einem einen Rotorraum (11) von einem Statorraum (12) trennenden Spaltrohr (6), das außen an die Statorpole (3) und an die Polschuhe (9) innerhalb eines Luftspalts (13) anschmiegbar ist und einstückig mit keilförmigen Vorsprüngen (8) geformt ist, die in die Zwischenräume (7) eingreifen.

Unter "Spaltrohr" sind hierbei auch einseitig geschlossene Spalttöpfe mit eingeschlossen. Der Einfachheit halber wird hier nur einmalig darauf hingewiesen.

Der Innenraum von Spaltrohrmotoren für Ölpumpen ist mit dem zu fördernden Medium gefüllt und steht im Betrieb unter hohem Druck. Dieser Druck übt auf alle Begrenzungsflächen des Rotorraums hohe Kräfte aus, die in Richtung einer Volumenvergrößerung wirken. Aus Gründen eines möglichst optimalen Wirkungsgrades verbietet es sich das Spaltrohr beliebig robust zu dimensionieren. Bei einem dünnen Spaltrohr treten jedoch hohe Scherkräften im Bereich des Zwischenraums zwischen den Polschuhen auf, die es zu verringern gilt. Die Verwendung von hochfesten Materialien, wie Edelstahl oder glasfaserverstärkte Kunststoffe würde den Fertigungsaufwand erheblich erhöhen. Ein Nachteil besteht auch darin, dass Fertigungstoleranzen durch die starren Materialien kaum ausgeglichen werden können. Das Füllen von Stator-Hohlräumen mit aushärtbaren Materialien würde der Materialverbrauch, das Gewicht und/oder die Wirtschaftlichkeit negativ beeinträchtigt. Weiter bestünde die Gefahr der Lunkerbildung und generell die Gefahr einer unvollständigen Füllung. Solche Fehler lassen sich nur mit hohem Aufwand feststellen und können zu Produktausfällen führen.

Aufgabe der Erfindung ist es bei einem Spaltrohrmotor der eingangs genannten Gattung dafür Sorge zu tragen, dass das Spaltrohr eine hohe Druckfestigkeit aufweist und dabei so dimensioniert ist, dass der Wirkungsgrad möglichst wenig beeinträchtigt wird, das Gewicht gering ist und Toleranzen ausgleichbar sind und eine hohe Wirtschaftlichkeit erreicht wird.

Diese Aufgabe wird erfindungsgemäß durch das Kennzeichen des Anspruchs 1 gelöst. Dadurch, dass die Vorsprünge in einem drucklosen Zustand die Polschuhe linienhaft berühren und die Berührungslinien näher an der engsten Stelle der Zwischenräume angeordnet sind als an einer radial inneren Polschuhbegrenzung. Der Keilwinkel der Vorsprünge ist so mit einem Keilwinkel zweier benachbarter Polschuhe abgestimmt, dass bei radialer Ausdehnung des Spaltrohrs zuerst der schmalere Bereich der Vorsprünge und dann erst kontinuierlich die breiteren Bereiche an den Polschuhen in Anlage kommen. Die radiale Dehnung im Spaltrohr wird durch diese Maßnahme deutlich reduziert und die auftretenden, hierdurch aber verringerten Spannungen werden in einen Bereich größerer Wanddicken verschoben. "Linienhafte Berührung" umfasst hier auch flächenhafte Berührungen, die sich aber im Wesentlichen entlang einer Linie erstrecken.

Weiterbildungen der Erfindung werden in den Unteransprüchen näher dargestellt. Zweckmäßigerweise ist durch die beschriebene Lösung in einem drucklosen Auslieferungs-Zustand zwischen den keilförmigen Vorsprüngen und an tangential gegenüberliegenden Bereichen der Polschuhe radial innerhalb der Berührungslinien ein schmaler Keilspalt vorhanden. Dieser Spalt beginnt sich bei Druckbeaufschlagung von der Berührungsstelle her zu schließen.

Die Gefahr von Scherkräften kann weiter verringert werden, wenn in einem drucklosen Auslieferungs-Zustand zwischen dem Spaltrohr (6) und den Polschuhen (9) ein schmaler Ringsegment-Spalt (16) vorhanden ist. Dadurch wird Bei Druckbeaufschlagung zunächst weiter der keilförmige Vorsprung belastet. Der geringe Spalt bedeutet auch, dass das Spaltrohr einen geringfügig kleineren Umfang hat als der durch die Pole definierte Kreis. Dies führt zu einer sehr geringen Dehnung des Spaltrohrs.

Unter Druck sind die Spalte zwischen dem Spaltrohr und dem Stator bzw. den Polschuhen geschlossen. Die keilförmigen Vorsprünge nehmen in diesem Zustand den größten Teil des Flüssigkeitsdrucks auf.

Eine besonders vorteilhafte Möglichkeit Scherkräfte zu minimieren besteht darin, dass das Spaltrohr im Übergangsbereich zwischen Rohrsegmenten und den keilförmigen Vorsprüngen mit Verrundungen ausgeführt sind.

Vorzugsweise besteht das Spaltrohr aus einem Thermoplastmaterial. Der elastische Kunststoff ist in der Lage in Grenzen Fertigungstoleranzen aufzunehmen.

Nachfolgend wird ein Ausführungsbeispiel der Erfindung anhand der Zeichnung näher erläutert. Es zeigen:
- Fig. 1: eine Schnittdarstellung eines Stators gemäß Stand der Technik,
- Fig. 2: einen vergrößerten Ausschnitt aus Fig. 1,
- Fig. 3: eine Teilschnittansicht eines erfindungsgemäßen Spaltpolmotors,
- Fig. 4: zwei gegenüberliegende Polschuhe,
- Fig. 5: ein Spaltrohr und

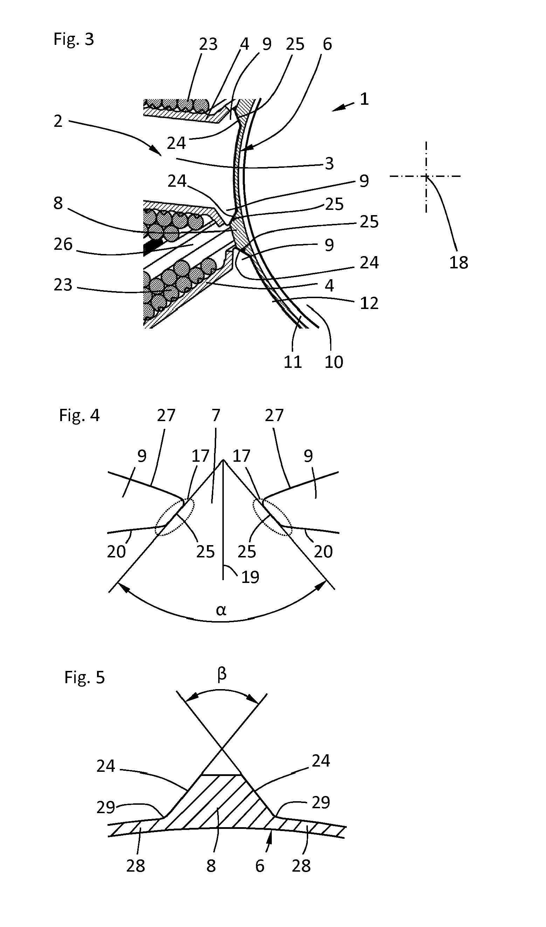

- Fig. 5: die Polschuhe aus Fig. 4 mit dem Spaltrohr aus Fig. 5.

Hinweis: Bezugszeichen mit Apostroph und entsprechende Bezugszeichen ohne Apostroph bezeichnen namensgleiche Einzelheiten in den Zeichnungen und der Zeichnungsbeschreibung. Es handelt sich im vorliegenden Fall um die Verwendung im Stand der Technik. Die Ansprüche, die Beschreibungseinleitung, die Bezugszeichenliste und die Zusammenfassung enthalten der Einfachheit halber nur Bezugszeichen ohne Apostroph.

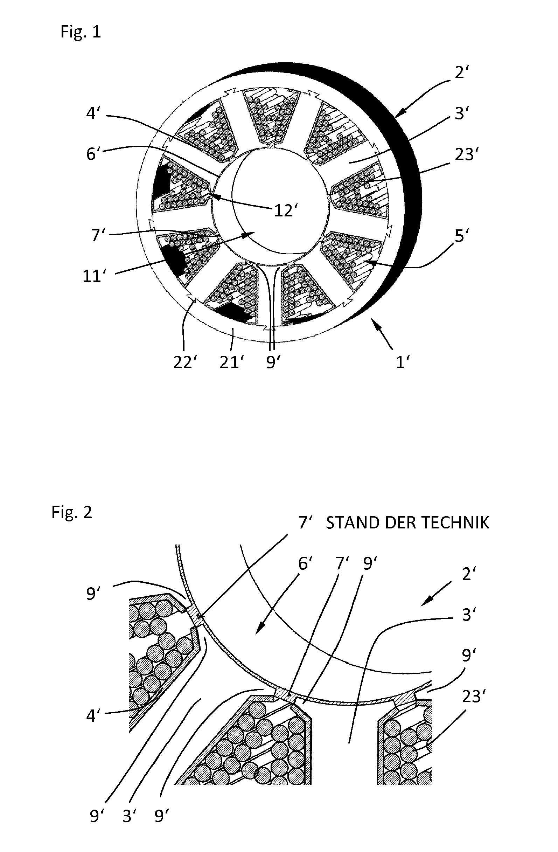

Fig. 1 zeigt eine Schnittdarstellung eines Stators 2' eines Spaltpolmotors 1' wie er aus dem Stand der Technik bekannt ist, mit einem mehrteiligen Statorblechpaket, welches einen geschlossenen Rückschlussring 21' und eine Vielzahl von Statorpolen 3' umfasst. Die Statorpole 3' sind formschlüssig am Rückschlussring 21 befestigt. Die Befestigung erfolgt über eine Schwalbenschwanzverbindung 22'. Die Statorpole 3' sind mit Isolierungen 4' versehen und einzeln mit Spulen 23' bewickelt, die zusammen die Wicklung 5' bilden. An den radial inneren Enden der Statorpole 3' sind Polschuhe 9' angeordnet, die sich tangential erstrecken. Zwischen den Polschuhen 9' verbleiben Zwischenräume 7' in welche rippenartige Vorsprünge 8' hineinragen.
Fig. 2 zeigt einen vergrößerten Ausschnitt des Stators 2' aus Fig. 1, mit den Statorpolen 3', den Polschuhen 9', dem Spaltrohr 6', den Vorsprüngen 7', den Isolierungen 4' und den Spulen 23'. Die Seitenwandung der Vorsprünge 8' sind parallel ausgeführt. Bei einer Druckbeaufschlagung ergeben sich hierdurch erhebliche Scherkräfte, weil die Vorsprünge 8' kaum Druckkräfte aufnehmen können.
Fig. 3 zeigt eine Teilschnittansicht eines erfindungsgemäßen Spaltpolmotors 1, bestehend aus einem permanentmagnetischen Innenrotor 10 und einem Stator 2, mit um eine Drehachse 18 angeordneten Statorpolen 3, Polschuhen 9, Isolierungen 4, in Nuten 26 aufgenommenen Spulen 23 und einem Spaltrohr 6, das Vorsprünge 8 aufweist. Hier sind die Vorsprünge 8 im Gegensatz zum Stand der Technik mit keilförmigen Schrägen 24 versehen. Die Polschuhe 9 weisen korrespondierende Anlageflächen 25 auf. Das Spaltrohr 6 trennt einen Rotorraum 11 von einem Statorraum 12.
Fig. 4 zeigt zwei gegenüberliegende Polschuhe 9, welche durch einen Zwischenraum 7 voneinander getrennt sind. Der Zwischenraum 7 erstreckt sich zwischen tangentialen Enden 17 der Polschuhe. Die Enden 17 sind als schräge Anlageflächen 25 ausgebildet, die zusammen einen Winkel α bilden. Beide Enden 17 sind gegenüber einer Radialen 19 um den halben Winkel α geneigt. Die tangentialen Enden 17 sind radial innen durch innere Polschuhbegrenzungsflächen 20 begrenzt und radial außen durch äußere Polschuhbegrenzungsflächen 27. In den Übergangsbereichen zwischen den tangentialen Enden 17 und den inneren sowie den äußeren Polschuhbegrenzungsflächen 20, 27 sind die Polschuhe abgerundet.
Fig. 5 zeigt ein Spaltrohr 6 mit einem Vorsprung 8, welcher zwei Schrägen 24 aufweist, die miteinander einen Winkel β bilden. Die Winkel α und β sind so gewählt, dass α größer als β ist. Im Übergangsbereich zwischen Spaltrohrsegmenten 28 und den Schrägen 24 sind Verrundungen 29 vorgesehen. Hierdurch werden Scherkräfte weiter reduziert und der Verformungsbereich unter Druck kann sich einfacher in Richtung Vorsprung 8 verlagern.

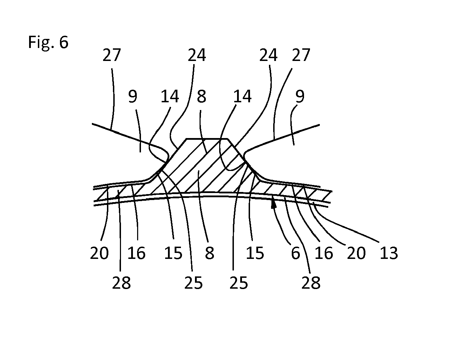

Fig. 6 zeigt die Polschuhe 9 aus Fig. 4 und das Spaltrohr 6 aus Fig. 5, mit dem Vorsprung 8, den Schrägen 24 und den Anlageflächen 25. Der Vorsprung 8 ragt hier etwas weiter in den Zwischenraum (siehe Fig. 4) hinein als in Fig. 3; er berührt die Polschuhe 9 entlang von 14, die sich axial und parallel zu einer Drehachse entlang der tangentialen Enden 17 (siehe Fig. 4) der Polschuhe 9 erstrecken. Aufgrund der beschriebenen Winkelunterschiede zwischen den Winkeln α und β, liegen die Schrägen 24 nicht satt auf den Anlageflächen 25 auf, sondern bilden jeweils einen spitzwinkligen Keilspalt 15. Auch zwischen der inneren Polschuhbegrenzung 20 und den Spaltrohrsegmenten 28 ist ein schmaler Ringsegmentspalt 16 zu erkennen. In Fig. 6 sind die geometrischen Verhältnisse zwischen Polschuh 9 und Spaltrohr 6 so dargestellt, wie in einem drucklosen Auslieferungszustand. Aufgrund von Form- und Lagetoleranzen ist es unwahrscheinlich, dass alle Zwischenräume, Keilspalten 15 und Ringsegmentspalte 16 im drucklosen Zustand ihre ideale Form einnehmen, dennoch ergeben sich unter Öldruck ausgeglichene und definierte Verhältnisse. Die Größe der Winkel α und β (siehe Fig. 4 und 5) und damit der Keilspalte 15 sind abhängig von der Nachgiebigkeit des Spaltrohrmaterials. Je härter das Material des Spaltrohrs 6 ist, desto kleiner kann der Winkelunterschied zwischen α und β sein. Eine ähnliche Abhängigkeit ergibt sich von der Größe des Drucks, der im Rotorraum (siehe Fig. 3) im Betrieb auftritt. Je größer der Druck ist, desto größer muss der Keilspalt und damit die Winkeldifferenz zwischen den Winkeln α und β sein. Im Idealfall werden die Keilspalte 15 aufgrund des Innendrucks gerade auf 0° zusammengedrückt. Dadurch würden keine nennenswerten Scherkräfte im Bereich des Zwischenraums zwischen den Polschuhen auftreten. Die absolute Größe des Winkels α sollte etwa im Bereich von 90° liegen (+/- 15°). Bei einem kleineren Winkel bestünde die Gefahr, dass der Vorsprung 8 in den Zwischenraum gedrückt wird und bei einem größeren Winkel würden sich die Scherkräfte erhöhen.

**Bezugszeichenliste**

| | | | |
|---|---|---|---|
| 1 | Spaltrohrmotor | 29 | Verrundung |
| 2 | Stator | | |
| 3 | Statorpol | | |
| 4 | Isolierung | | |
| 5 | Wicklung | | |
| 6 | Spaltrohr | | |
| 7 | Zwischenraum | | |
| 8 | Vorsprung | | |
| 9 | Polschuh | | |
| 10 | Innenrotor | | |
| 11 | Rotorraum | | |
| 12 | Statorraum | | |
| 13 | Luftspalt | | |
| 14 | Berührungslinie | | |
| 15 | Keilspalt | | |
| 16 | Ringsegmentspalt | | |
| 17 | tangentiales Ende | | |
| 18 | Drehachse | | |
| 19 | radiale Linie | | |
| 20 | Innere Polschuhbegrenzung | | |
| 21 | Rückschlussring | | |
| 22 | Schwalbenschwanzverbindung | | |
| 23 | Spule | | |
| 24 | Schräge | | |
| 25 | Anlagefläche | | |
| 26 | Nut | | |
| 27 | äußere Polschuhbegrenzung | | |
| 28 | Spaltrohrsegment | | |

## Patentansprüche

1. Spaltrohrmotor (1) für eine Ölpumpe, mit einem Stator (2), mit ausgeprägten Statorpolen (3), welche mit einer Isolierung (4) und einer Wicklung (5) versehen sind und Polschuhe (9) aufweisen, deren tangentiale Enden (17) gegenüber einer von einer Drehachse (18) des Spaltrohrmotors (1) ausgehenden radialen Linie (19) geneigt sind, so dass sich ein Zwischenraum (7) zwischen zwei benachbarten Polschuhen (9) nach radial außen verengt, mit einem permanentmagnetischen Innenrotor (10) und einem einen Rotorraum (11) von einem Statorraum (12) trennenden Spaltrohr (6), das außen an die Statorpole (3) und an die Polschuhe (9) innerhalb eines Luftspalts (13) anschmiegbar ist und einstückig mit keilförmigen Vorsprüngen (8) geformt ist, die in die Zwischenräume (7) eingreifen, **dadurch gekennzeichnet, dass** die Vorsprünge (8) in einem drucklosen Zustand die Polschuhe (9) linienhaft berühren und die (14) näher an der engsten Stelle der Zwischenräume (7) angeordnet sind als an einer radial inneren Polschuhbegrenzung (20).

2. Spaltrohrmotor nach Anspruch 1, **dadurch gekennzeichnet, dass** in einem drucklosen Auslieferungs-Zustand zwischen den keilförmigen Vorsprüngen (8) und an tangential gegenüberliegenden Bereichen der Polschuhe (9) radial innerhalb der (14) ein schmaler Keilspalt (15) vorhanden ist.

3. Spaltrohrmotor nach Anspruch 1 oder 2, **dadurch gekennzeichnet, dass** in einem drucklosen Auslieferungs-Zustand zwischen dem Spaltrohr (6) und den Polschuhen (9) ein schmaler Ringsegment-Spalt (16) vorhanden ist.

4. Spaltrohrmotor nach Anspruch 1, 2 oder 3, **dadurch gekennzeichnet, dass** der Keilspalt (15) und/oder der Ringsegment-Spalt (16) in einem unter Druck stehenden Rotorraum (12) verengt sind.

5. Spaltrohrmotor nach zumindest einem der vorangehenden Ansprüche, **dadurch gekennzeichnet, dass** das Spaltrohr im Übergangsbereich zwischen Spaltrohrsegmenten (28) und den keilförmigen Vorsprüngen (8) mit einer Verrundung (29) ausgeführt sind.

6. Spaltrohrmotor nach zumindest einem der vorangehenden Ansprüche, **dadurch gekennzeichnet, dass** das Spaltrohr (6) aus einem spritzgusstechnisch verarbeitbarem Thermoplastmaterial besteht.
